# EUROPEAN PATENT APPLICATION

(11) **EP 1 484 861 A2**
(43) Date of publication of application: **08.12.2004**
(21) Application number: 03029783.2
(22) Date of filing: 23.12.2003
(51) Int. Cl.: H04L 12/28

(54) **Wireless network and method for data encryption/decryption in a wireless network**

(30) Priority: 04.06.2003 US 453946
(71) Applicant: Hewlett-Packard Development Company, L.P., Houston, Texas 77070 (US)
(72) Inventor: McClellan, Stanley Archer, Allen, Texas 75013 (US)
(74) Representative: Schoppe, Fritz, Dipl.-Ing.

(57) **Abstract**

Implementing a portion of a data stream to encrypt [20] data packets [16] being transmitted in a wireless network [32]. More specifically, data segments from one or more data packets [ 16] may be used to dynamically change the master key [34] used to encrypt [20] the data packets [32]. Each of the transmitting and receiving nodes [12, 14] includes a constellation of master keys [34] which may be implemented to encrypt [20] a data packet [16]. Data segments selected from one or more data packets [16] which are transmitted from the transmitting node [12] to the receiving node [14] may be used to define the selection of one of the master keys [34] used to encrypt [20] a subsequent data packet [16]. Because the master key [34] may be selected as a function of the data stream, the master key [34] used to encrypt [20] a particular packet [16] may be changed dynamically on apacket-by-packet basis.

## Description

### Cross-Reference to Related Applications

The following commonly owned application is hereby incorporated by reference for all purposes:

United States Patent Application Serial No. , filed concurrently herewith, entitled "Wireless Network and Methods for Communicating in a Wireless Network" by Stanley Archer McClellan.

### BACKGROUND

This section is intended to introduce the reader to various aspects of art which may be related to various embodiments of the present invention which are described and/or claimed below. This discussion is believed to be helpful in providing the reader with background information to facilitate a better understanding of various embodiments of the present invention. Accordingly, it should be understood that these statements are to be read in this light, and not as admissions of prior art.

Computer networks, such as local area networks (LANs), generally include two or more computer systems or nodes that are linked together such that each of the nodes in the network can communicate and share data with the other nodes in the network. One type of LAN technology that may be implemented is the wireless local area network (WLAN) that uses high-frequency radio waves rather than wires to facilitate communication between the nodes. Advantageously, without physical cabling for each node in the WLAN, the network may be more flexible. For instance, mobility and portability of WLAN nodes is simplified, because there is no physical cabling to contain movement or placement of the nodes. This benefit is particularly advantageous in situations where physical wiring of certain node sites may often be difficult or impractical.

WLANs are generally designed in accordance with universally recognized specifications and standard protocols to specify the type of error checking, data compression, transmission parameters, and receipt parameters, for example. IEEE 802.11 refers to a family of specifications developed by the Institute of Electrical and Electronics Engineers (IEEE) for WLAN technology. IEEE 802.11 specifies an over-the-air interface protocol between nodes in the WLAN such that data can be reliably transmitted between nodes in the network.

As can be appreciated, it may be desirable to transmit secured data and information over the WLAN. LANs may be more secure than WLANs because LANs may be protected by the physicalities of their structure. For example, some or all parts of a LAN may be located within a building that can be protected from unauthorized access. WLANs need not have the same physical constraints, and therefore, may be more vulnerable to tampering since all items of the network may not be located in a secure facility. Furthermore, because data and information are transmitted through the air via radio waves in a WLAN, such transmissions may be more susceptible to interception as compared with the same transmissions over a cable in a LAN.

Accordingly, standard specifications and protocols generally provide one or more security protocols. For instance, the IEEE 802.11b specification, which is included in the IEEE 802.11 family, provides a security protocol for WLANs, generally referred to as wired-equivalent privacy (WEP). WEP is designed for WLANs to provide the same level of security as that of a wired LAN. One objective of the WEP protocol is to provide security for encrypting data over radio waves so that it is protected from unauthorized access (i.e., interception and decryption by an unauthorized user) as it is transmitted from one node to another. As can be appreciated, encryption generally refers to the translation of data into a secret code or "cipher text" to prevent unauthorized viewing of the data. To read an encrypted transmission, a receiving node generally uses a key to translate the cipher text back into readable plain text. Disadvantageously, the encryption techniques implemented in WEP may be insufficient to secure data adequately, which may result in compromises in data transmitted in WEP-secured WLANs.

Embodiments of the present invention may address one or more of the problems set forth above.

### BRIEF DESCRIPTION OF THE DRAWINGS

Advantages of various embodiments of the invention may become apparent upon reading the following detailed description and upon reference to the drawings in which:

Fig. 1 is a block diagram illustrating an exemplary wireless network;

Fig. 2 is a block diagram of an exemplary wireless network implementing exemplary embodiments of the present invention;

Fig. 3 is a block diagram of an exemplary wireless network implementing further exemplary embodiments of the present invention; and

Fig. 4 is a block diagram of an exemplary wireless network implementing still further exemplary embodiments of the present invention.

### DETAILED DESCRIPTION OF SPECIFIC EMBODIMENTS

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Generally speaking, in accordance with embodiments of the present invention, techniques for improving over-the-air transmissions in networks implementing wired-equivalent privacy (WEP) security protocols are described. In accordance with one embodiment, during transmission of an encrypted data packet, the standard initialization vector field in the header of an encrypted data packet does not include the corresponding initialization vector used to encrypt the data packet. Further, the initialization vector may be constructed as a function of other data packets that may be transmitted before the encrypted data packet that implemented the corresponding initialization vector. A receiving node can reconstruct the initialization vector using the previously transmitted data packets. Accordingly, the receiving node is able to decrypt data packets without receiving an initialization vector along with the corresponding data packet that was encrypted with the initialization vector. Similarly, the techniques of utilizing segments of previous data packets to encrypt subsequent data packets may also be used to dynamically change the master key 18 used to encrypt subsequent data packets. A more detailed description of exemplary embodiments of the present invention is discussed below.

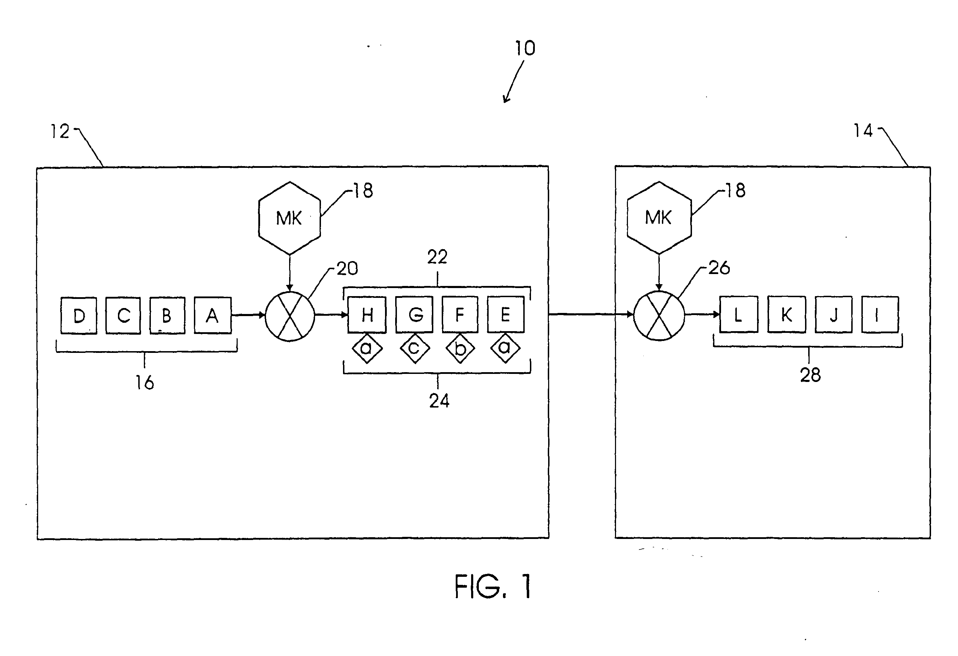

Turning now to the drawings, and referring initially to Fig. 1, an exemplary network 10 including a first node 12 and a second node 14 is generally illustrated. As can be appreciated, the network 10 may comprise a wireless network, such as a wireless local area network (WLAN) for example, and may include any number of nodes, such as the nodes 12 and 14. Each node 12 and 14 includes one or more processors and one or more memory devices, and is capable of transmitting and receiving data wirelessly, such as by using high-frequency radio waves.

For purposes of illustration only, the first node 12 may be referred to as the transmission node, and the second node 14 may be referred to as the receiving node. However, as previously described, each of the nodes 12 and 14 is capable of transmitting and receiving data. As previously described, to transmit data from the node 12 to the node 14 in the wireless network 10, a security protocol such as wired-equivalent privacy (WEP) is generally implemented to encrypt the data. As can be appreciated, the presently described WEP architecture is generally implemented in IEEE 802-style WLAN networks, such as the network 10. The network 10 may be configured with any one of a number of different WEP architectures that implement different modulation schemes and effective bit rates, such as IEEE 802.11 a, IEEE 802.11 b, IEEE 842.11g, and IEEE 802.11 h, as well as those architectures relying on port-based access control through higher level authentication, such as IEEE 802.1x, as can be appreciated by those skilled in the art.

To send information from the node 12 to the node 14, the information is generally divided into data packets 16, such as data packets A-D. Each of the data packets 16 may include 128 bits of data, for example. As previously described, the network 10 has a security protocol, such as WEP, to encrypt the data packets 16 at the transmission node 12 before the data packets 16 are transmitted over-the-air to the receiving node 14. Accordingly, each of the nodes 12 and 14 included in the network 10 includes a master key 18, which may also be referred to herein as a "shared secret," "seed," or "long encryption key." As can be appreciated, the master key 18 may include a table that provides a mechanism for encrypting and decrypting the data packets 16. For IEEE 802.11 networks, a master key 18 is generally installed in each node 12 and 14 by a system administrator, for example, before secured data may be transmitted over the network 10. Alternatively, for IEEE 802.1x networks, the master key 18 may be installed automatically at the start of an authenticated session. Generally speaking, the master key 18 enables a user to exchange encrypted data packets 16 with other users that have the same master key 18. Accordingly, limited distribution and access to the master key 18 may advantageously provide for better data security. As can be appreciated, the presently described encryption technique implementing the same master key 18 to encrypt and decrypt the data packets 16 may be referred to as "symmetric encryption."

During data transmission, the data packets 16 may be encrypted using the master key 18 in the transmission node 12, as indicated by the encryption operation 20. As can be appreciated, the encryption operation 20 may include data compression. During the encryption operation 20, the data packets 16 are translated into encrypted data packets 22. The encrypted data for a respective encrypted data packet 22, may be referred to herein, as a "paytoad" E-H. As can be appreciated, the payloads E-H comprise encrypted cipher text. In the present exemplary embodiment, the payload E corresponds to data packet A, the payload F corresponds to data packet B, the payload G corresponds to data packet C, and the payload H corresponds to data packet D. Each encrypted data packet 22 may also include a header 24 comprising one or more bits of unencrypted (clear-text) information, such as packet destination, packet size, and encryption information, for example.

In many standard WEP implementations, an initialization vector a-c may be embedded into the header 24 of each of the data packets 16, during the encryption operation 20. Accordingly, each of the encrypted data packets 22 may include a corresponding initialization vector a-c. The initialization vector a-c is a non-secret, clear-text, binary vector used by the initializing input algorithm for the encryption of the data packets 16. That is to say that for a particular data packet 16, such as the data packet A, a respective initialization vector "a" may be implemented in conjunction with the master key 18 to create a specific key sequence to encrypt the data packet A, as described further below. For IEEE 802.11 and IEEE 802.1x implementations, each initialization vector a-c typically comprises 24 bits. Generally speaking, an initialization vector a-c is used as a "seed value" to render a specific encryption key from the master key 18 during the encryption operation 20. The initialization vector a-c for each data packet 16 may be chosen randomly or deterministically, as described further below.

The per-packet initialization vector a-c may be used by the receiving node 14 in conjunction with the master key 18 to reconstruct the specific key sequence which was used to encrypt the data packets 16. Once the specific key sequence is available, the encrypted data packet 22 can be successfully decrypted. The initialization vector a-c used to derive the specific encryption key sequence for a particular data packet 16 is transmitted in an unencrypted form in the header 24 of the corresponding encrypted data packet 22.

When the encrypted data packets 22 are received at the receiving node 14, the encrypted data packets 22 may be decrypted by implementing the master key 18 in conjunction with the corresponding initialization vector a-c for each of the encrypted data packets 22. The decryption operation is generally designated by reference numeral 26. As can be appreciated, the decryption operation 26 may include data decompression. During the decryption operation 26, the initialization vector a-c is implemented in conjunction with the master key 18 in the receiving node 14 to re-create the specific key sequence that was used to encrypt the corresponding data packet 16 during the encryption operation 20. As previously discussed, by implementing the specific key sequence that was used to encrypt the data packet 16, the encrypted data packet 22 may be decrypted. The decryption operation 26 produces decrypted data packets 28. As can be appreciated, the decrypted data packets 28 correspond to the originally transmitted data packets 16. Accordingly, each of the data packets A-D (data packets 16) has a corresponding decrypted data packet I-L (decrypted data packets 28).

As can be appreciated, there may be a discrete (and therefore, limited) number of initialization vectors a-c that may be implemented with the master key 18 to encrypt (and decrypt) the data packets 16. For example, for an initialization vector comprising 24 bits, there are 2²⁴, or approximately 16.8 million, possible unique combinations. In one exemplary technique, the initialization vectors a-c may be chosen incrementally from a list of initialization vectors a-c. The assignment of the first initialization vector a-c, corresponding to a first encrypted data packet 22, may be assigned randomly, or assigned in accordance with a preset value. Each initialization vector a-c implemented to encrypt subsequent data packets 16 may be assigned incrementally from the list of initialization vectors a-c, for example, as illustrated in Fig. 1. For the present exemplary description, the encrypted data packet E has an initialization vector of "a", the encrypted data packet F has an initialization vector of "b", and the encrypted data packet G has an initialization vector of "c". That is to say that the initialization vector "a" is implemented in conjunction with the master key 18 to encrypt the data packet A to produce the encrypted data packet E, and so forth.

Because of the limited number of available initialization vectors a-c, the initialization vectors a-c may eventually be reused after the transmission of a number of encrypted data packets 22. For example, to encrypt the data packet D, an initialization vector "a" may be implemented. The initialization vector "a" may be used in conjunction with the master key 18 to encrypt the data packet D to produce the encrypted payload H. However, as previously described, the same initialization vector "a" was also implemented to encrypt the data packet A to produce the encrypted payload E. Accordingly, the same key sequence implemented to encrypt the data packet A is used to encrypt the data packet D. Once the master key 18 and the initialization vector "a" are known, such as after receiving the encrypted payload E, the encrypted payload H can be decrypted.

Transmitting an initialization vector a-c, which includes a portion of the mechanism for decrypting the encrypted data packet 22 to which it corresponds, in the unencrypted header 24 of the corresponding encrypted data packet 22, may disadvantageously reduce the security of data transmission in the network 10. Once enough initialization vectors a-c are transmitted between wireless nodes 12 and 14 in the network 10, a recipient (including an unintended recipient) may eventually be able to reconstruct the master key 18 from the initialization vectors a-c. As can be appreciated, this scenario may eventually lead to the ability of the user to decrypt all subsequent encrypted data packets 22 since the user (including the unintended recipient) now has the reconstructed master key 18, as described below.

The likelihood of unauthorized access to the encrypted data packets 22 in WEP- based networks, such as the network 10, increases when the same master key 18 and the same initialization vector a-c are used to encrypt different data packets 16. The WEP encryption mechanism generally comprises an Exclusive-OR operation (XOR) between binary values of the specific encryption key and the data, which produces a binary output value. There are three variables in this equation: (1) the initialization vector a-c; (2) the unencrypted data packet 16; and (3) the encrypted payload E-H. As a result, when the initialization vectors a-c are re-used, an unintended recipient may have two of the three variables (i.e., the clear-text initialization vector a-c and the encrypted payload E-H), and can deduce large parts of the third (i.e., the unencrypted data packet 16), based partially on one or more of the following factors: (1) an unintended recipient's knowledge of common Internet Protocol ("I.P.") packet structure, such as header information; (2) partial or full knowledge of common payload information, such as web addresses, domain-name queries, and so on; and (3) "stimulated" response packets, such as when the unintended recipient's computer queries the transmitting node a loaded question (e.g., "who are you?" or "what is your I.P. number?"). Each time all three variables are known for a particular re-used initialization vector a-c, part of the master key 18 is revealed to the unintended recipient. In other words, in the embodiment of Fig. 1, when the initialization vector a-c is reused in the encryption process 20 to encrypt subsequent data packets 16, the unintended user can immediately decrypt the encrypted payload E-H. Once enough information about the master key 18 is revealed for the particular initialization vector, the process can be repeated for the other possible initialization vectors a-c to construct the master key 18 piece-by-piece. Thus, the unintended recipient can construct a "table" of possible initialization vectors a-c and perform this process in a parallel fashion rather than in a sequential fashion. Similarly, there are other approaches which sequentially reveal small segments of the master key based on recursive algorithms rather than table-based attacks, but the resulting compromise potential for data transmission is the same, as can be appreciated by those skilled in the art.

Creating an obvious association between the initialization vector a-c and the encrypted data packet 22 by embedding the initialization vector a-c used to encrypt the corresponding encrypted data packet 22 in the clear-text header 24, may be disadvantageous. As described above, the disadvantages may become more apparent when the same master key 18 is used in conjunction with the same initialization vector a-c to encrypt different data packets 16. Most IEEE 802.11b-style WLANs use static master keys 18 among all client nodes. With the ever-increasing transmission rates and the relatively short field of the initialization vector a-c (e.g., 24 bits), the likelihood that encrypted data packets 22 may be compromised (i.e., decrypted by unauthorized users intercepting the over-the-air communications) over a short period of time may disadvantageously increase. For example, an IEEE 802.11b-style network operating at a transmission rate of approximately 11 Mbps, may reuse initialization vectors a-c for a given master key 18 in less than 5 seconds.

For IEEE 802. 1x-based networks, the disadvantages described above may be less apparent, but may also lead to unsecured data transmission in the network 10. WLAN networks implementing an IEEE 802.1x protocol are configured to control several aspects of the WLAN security, including over-the-air encryption. For example, instead of having common, pre-configured master keys for all nodes, (such as the master key 18 implemented in nodes 12 and 14 of Fig. 1), IEEE 802.1x networks install the master key 18 "dynamically" at the start (or reauthentication) of each session. As a result, the master keys 18 in use at any time on the IEEE 802.1x network may be unique for each node. Accordingly, different data packets 16 encrypted using keys generated from the same initialization vector a-c can only be generated by a single node in the network 10, instead of all of the nodes in the network 10. This may reduce the likelihood of an attacker overhearing (i.e., an unauthorized user intercepting and decrypting) compromisable encrypted data packets 22 by a factor related to the number of network users and the number of unique master keys 18 maintained by the network 10.

However, even with dynamic WEP, the master key 18 is essentially static for the duration of the session (or until forced re-authentication). With fast over-the-air data rates, the likelihood of initialization vector a-c reuse within the same session may again become a problem. For example, for a network 10 implementing a IEEE 802. 1x protocol and having an over-the-air transmission rate of approximately 54 Mbps and at least five nodes or users, each node, implementing a different master key 18, may be generating encrypted data packets 22 and incurring initialization vector a-c reuse at approximately the same rate as several nodes sharing a common master key 18 on an 11 Mbps IEEE 802-11b network (described above). Accordingly, similar to the static network described above, the network 10 implementing a dynamic master key 18 may also result in the unauthorized access of encrypted data packets 22.

Another technique for improving the security of data transmission in WLAN networks, implements randomization of the initialization vector a-c. That is to say, rather than assigning initialization vectors a-c incrementally (here, "a," then "b," then "c," etc., as described above), the initialization vectors a-c are assigned randomly, making them less predictable. However, randomly selected initialization vectors a-c may only reduce the likelihood of initialization vector reuse when compared to the usage of initialization vectors a-c which are selected in a deterministic fashion using a common initial condition, such as incrementation. Accordingly, while randomization of the initialization vector a-c may provide for more secure data transmission when compared to incremental assignment, by intercepting a larger data set (i.e., more encrypted data packets 22 and corresponding initialization vectors a-c), an unauthorized user may recreate the master key 18. As previously described, the master key 18 may then be used to decrypt subsequent encrypted data packets 22.

Accordingly, WEP encryption techniques in WLANs having an IEEE 802.11-style architecture, the clear text transmission of the 24-bit initialization vector a-c in the header 24 of each corresponding encrypted data packet 22, whether chosen randomly or deterministically, can be used to incrementally reveal information about the master key 18. Once the master key 18 is known, subsequent encrypted data packets 22 can be decrypted using the recreated master key 18 and the unencrypted initialization vector a-c contained in the header 24 of subsequent encrypted data packets 22. Regardless of whether the initialization vector a-c is selected randomly or in a deterministic fashion, the transmission of clear-text initialization vectors a-c as part of the encrypted data packets 22 may undermine the security of data being sent in a WLAN. Further, as WLAN air speeds increase, the use of per-session master keys 18 (e.g., IEEE 802.1x protocols) may become equally vulnerable to unauthorized decryption.

In accordance with embodiments of the present invention, eliminating or reducing the reuse of the initialization vector for a master key (static or dynamic), may advantageously improve the security of over-the-air encryption for IEEE 802. 11 and IEEE 802.1x-style wireless networks. Further, disassociating the transmission of the initialization vector used to encrypt a particular data packet and the transmission of the encrypted data packet may also improve the security of data transmission in the wireless network. Still further, elimination of the unencrypted initialization vector used to encrypt a particular data packet may further improve security during data transmission.

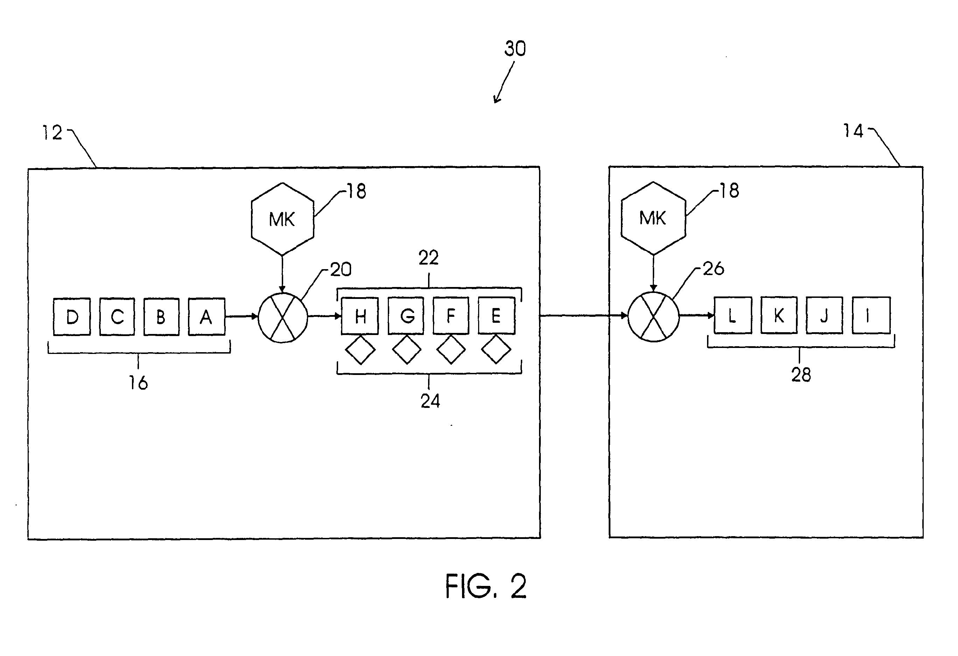

Referring now to Fig. 2, a block diagram of the wireless network 30, depicting exemplary embodiments of the present invention, is illustrated. For simplicity, like reference numerals are used to depict elements previously described with reference to Fig. 1. As previously described with respect to Fig. 1, the network 30 includes nodes 12 and 14. To transmit data packets 16 from the node 12 to the node 14, the data packets 16 are encrypted (encryption operation 20) using the master key 18. However, in accordance with one exemplary embodiment of the present invention, the initialization vector (not shown) used to derive the specific encryption sequence for a particular data packet A-D is created using some function of data from one or more previous data packet(s), as described further below. Because the initialization vector of the present exemplary embodiment is created as a function of the datastream from the transmission node 12, the initialization vector used to encrypt a particular data packet A-D does not have to be transmitted with the corresponding encrypted payload E-H to facilitate decryption at the receiving node 14. Instead, the initialization vector used to encrypt a particular encrypted payload E-H may be composed or reconstructed by the receiving node 14 after decryption of the previously transmitted encrypted data packets 22 containing the data segments that were used to create a specific initialization vector. Accordingly, the headers 24 of the encrypted data packets 22 do not include the initialization vector that was used to encrypt the corresponding payload E-H. In the present exemplary embodiment, the field implemented by conventional WEP systems to transmit the initialization vector for the corresponding encrypted data packet 22 may remain empty.

One embodiment of the present exemplary technique for creating the initialization vector is to use a segment from one or more data packets A-D to form the initialization vector. For example, for the data packet A, the first byte of data from each of three preceding data packets (not shown) may be sampled. The data segments from the preceding data packets may be concatenated to form the 24-bit initialization vector used to encrypt the data packet A. In accordance with this embodiment, an initialization vector may be created by combining bytes from successive data packets.

Alternatively, the sampled segments may be convoluted such that the initialization vector is created through sampling data from one or more preceding data packets and then convoluting the bits through the use of a state machine or convolution code. That is to say that bits may be sampled from several bytes from several data packets, and the bits may be mixed or convoluted such that the order of the bits is changed. As can be appreciated, the state machine or convolution code may implement the sampled bits to generate an encoded string. By way of example, bits may be sampled and successive bits may be combined through a NAND gate (for example), such that the output comprises the encoded sting. The convolution technique may provide for complex initialization vector selection schemes, thereby further obfuscating the initialization vector. Further, by using a state machine or convolution code to generate the initialization vector, the number of bits that make up the sampled segments may comprise less than the number of bits implemented in the initialization vector (here, 24). As can be appreciated, the convolution code or state machine may be implemented to manufacture any of the remaining bits to fill the initialization vector.

As can be appreciated, obfuscating the initialization vector makes unauthorized access of the encrypted data packets 22 more difficult. By implementing one of the present exemplary techniques, an initialization vector for a particular data packet A-D is transmitted in the payload E-H of one or more encrypted packets 22 that are transmitted prior to the particular data packet A-D that was encrypted using the corresponding initialization vector. Accordingly, the composition process of the initialization vector at the transmission node 12 and the recovery process at the receiving node 14 may be advantageously complex. For unauthorized users implementing table-based attacks to successfully access the encrypted data packets 22, the unauthorized user would have to successfully decrypt several packets simultaneously in the absence of known initialization vectors. This would require significantly more computational power by the unauthorized user, as well as the accumulation and correlation of sequences of packets rather than just the identification of compromisable events, as with conventional techniques.

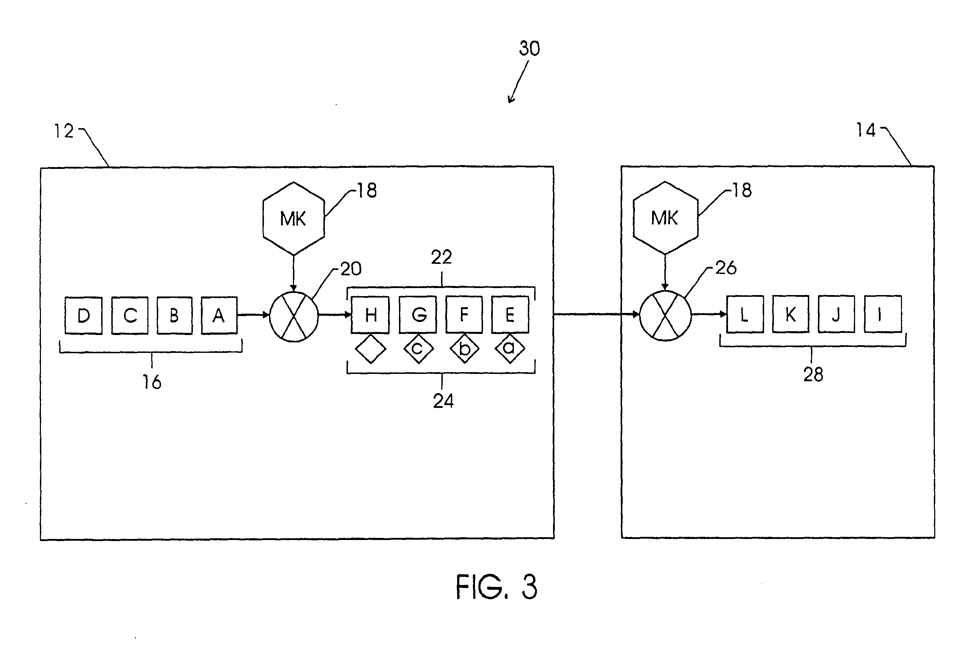

To implement the present exemplary obfuscation techniques, a "ramping up" period may be implemented to synchronize the participating nodes. The "ramping-up" period refers to the period of time before the receiving node is ready to receive data packets in accordance with the present obfuscation techniques. There are a number of approaches that may be implemented for "ramping-up" the receiving node's memory of successfully decrypted packets. In accordance with one approach of ramping-up, a number of packets are transmitted to the receiving node along with a corresponding initialization vector, as in conventional WEP networks. Once the receiving node has a sufficient cache of decrypted data, the initialization vector field in the header may be left empty in subsequent transmissions. This exemplary technique is described further with reference to Fig. 3.

One exemplary embodiment of the present technique for transmitting data over the wireless network 30, including the ramping-up period, may be further illustrated with reference to Fig. 3. As can be appreciated, the present embodiment is simplified for purposes of illustration. In the present exemplary embodiment, a datastream comprising the data packets A-D is transmitted from the transmission node 12 to the receiving node 14. The initialization vector "a" is implemented to encrypt the data packet A; the initialization vector "b" is used to encrypt the data packet B; and the initialization vector "c" is used to encrypt the data packet C. The initialization vectors a-c may be assigned by any conventional technique, as described above. Accordingly, the data packets A-C are encrypted using the initialization vectors a-c, and the resulting encrypted payloads E-G are transmitted to the receiving node 14. Each of the encrypted payloads E-G is transmitted with a corresponding initialization vector a-c embedded in the header 24. The transmission of the encrypted payloads E-G along with their corresponding initialization vectors a-c embedded in the header 24, comprises the "ramping-up" period. Once the payloads E-G are received at the node 14, they may be decrypted using the master key 18 and the corresponding initialization vector a-c for each respective encrypted payload E-G. Accordingly, the decrypted data packets I-K may be decrypted by conventional techniques.

However, after a number of data packets 16 are transmitted, received, and decrypted via conventional techniques, the present exemplary embodiments may be implemented. In the present exemplary embodiment, before the data packets A-C were encrypted, the first byte of data from each of the data packets A-C may be sampled by a processor (not shown) in the node 12. Each of the three bytes from the data packets A-C may be concatenated to form the initialization vector for the data packet D. The data packet D may be encrypted using the concatenated initialization vector to produce the payload H. Because the data packets A-C are encrypted and transmitted to the receiving node 14 before the transmission of the data packet D, the receiving node 14 has the information necessary to recreate the initialization vector used to encrypt the data packet D. Accordingly, the payload H may be transmitted without embedding the initialization vector used to encrypt the corresponding data packet D. Once the receiving node 14 decrypts the payloads E-G, a processor (not shown) in the receiving node 14 can reconstruct the initialization vector corresponding to the encrypted payload H and use it to decrypt the encrypted payload H. Similarly, after the ramp-up period (here, the transmission of the conventionally encrypted data packets E-G), all subsequent data packets may be encrypted and transmitted as described with reference to the data packet D, wherein the corresponding initialization vector is a function of subsequent data packets and is not transmitted in the header of the corresponding data packet.

Further, the present techniques may implement a "decoy" initialization vector in place of the omitted initialization vector. With the knowledge that current IEEE 802.11 and IEEE 802.1 x-style networks are defined to embed the initialization vector in the header of the corresponding data packet, a decoy initialization vector may be embedded in the header of an encrypted data packet in the standard field implemented for initialization vector transmission in standard protocols. Accordingly, rather than leaving the standard field in the header blank, a decoy initialization vector may be inserted to further frustrate any unauthorized access attempts.

Advantageously, the exemplary embodiments described herein are compatible with the existing framing definition of IEEE 802. 11 and IEEE 802.1x-style networks (ie., currently defined over-the-air bit fields are unused rather than redefined). As a result, the present techniques are backward compatible with both client-side network interface cards (NICs) and network-side access point (AP). Additionally, the present techniques may be optionally and passively enabled whenever both NIC and AP support the technique.

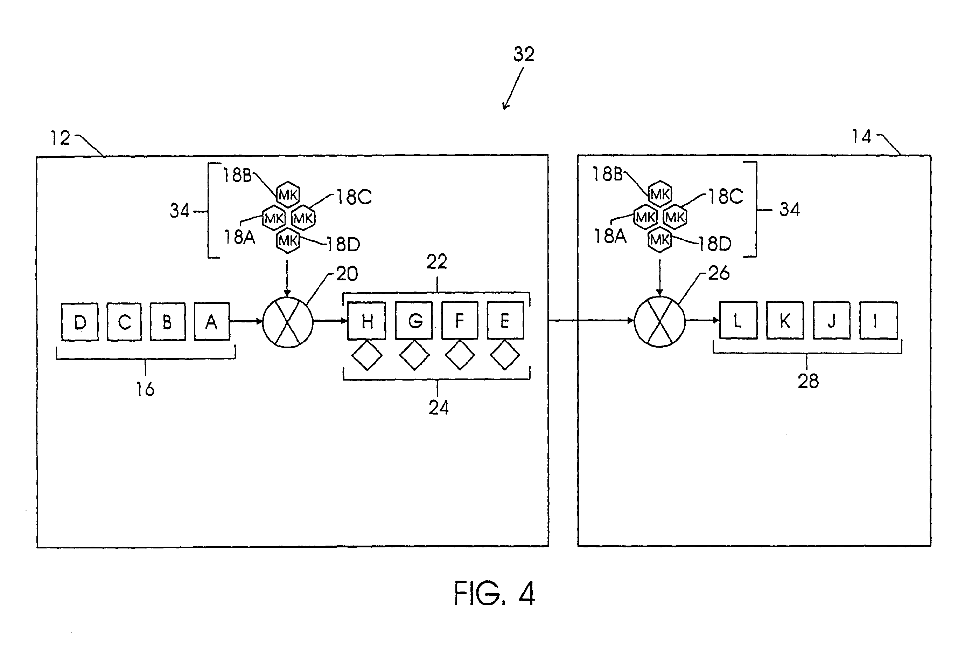

The techniques of utilizing segments of previous data packets to encrypt subsequent data packets may also be used to dynamically change the master key 18 used to encrypt subsequent data packets. Instead of, or in addition to using data segments from one or more data packets to define and obfuscate an initialization vector for subsequent data packets, as described with reference to Figs. 2 and 3, the data segments may be used to define the selection of one of a number of master keys 18 which may be used to encrypt a data packet, as further described below. Advantageously, the presently described techniques allow the IEEE 802.11 and IEEE 802.1x-style WEP master keys 18 to be changed dynamically in a configurable fashion for each data packet. As described in more detail with reference to Fig. 4 below, the presently described embodiments implement data segments from one or more previously transmitted data packets to select a particular master key with which to encrypt a subsequent data packet. Because the master key may be selected as a function of the data stream, the master key used to encrypt a particular packet may be changed dynamically and unpredicatably on a per-packet basis. As can be appreciated, the stochastic re-keying of the master key (i.e., the selection of a master key from a group of master keys) may advantageously reduce the likelihood that an unintended recipient may be able to decrypt an intercepted data packet.

Referring to Fig. 4, a wireless network 32, depicting the stochastic re-keying techniques described above, is illustrated. For simplicity, like reference numerals are used to depict elements previously described with reference to Figs. 1-3. Accordingly, the network 32 includes nodes 12 and 14. To transmit data packets 16 from the node 12 to the node 14, the data packets 16 are encrypted to produce respective encrypted data packets 22, as illustrated by the encryption operation 20. However, unlike the previously described networks (Figs. 1-3) which only include a single master key 18 (whether static or dynamic, per session) at each node 12 and 14, the network 32 includes a plurality of master keys 18A-18D. The plurality of master keys 18A-18D may be referred to collectively as a constellation 34 of master keys 18A-18D. Accordingly, the constellation 34 refers to the collection of all available master keys 18A-18D in a node, such as the nodes 12 and 14.

As previously described with reference to the master key 18, each of the master keys 18A-18D of the constellation 34 may include a table that provides a mechanism for encrypting and decrypting the data packets 16. For IEEE 802.11 networks, the constellation 34 of master keys 18A-18D is generally installed in each node 12 and 14 by a system administrator, for example, before secured data may be transmitted over the network 32. Alternatively, for IEEE 802.1x networks, the constellation 34 of master keys 18A-18D may be installed automatically at the start of an authenticated session or upon reauthentication of a session. The constellation 34 of master keys 18A-18D may be indexed such that a particular master key 18A-18D may be implemented with reference to a corresponding index entrypoint, as described further below.

During the encryption operation 20 (and again during the decryption operation 26), a master key 18A-18D is implemented to facilitate secured data transmission. Because there are a number of master keys 18A-18D, a particular master key may be selected for the encryption of a particular data packet. For purposes of illustration, the master key 18A may be selected to encrypt the data packet A, the master key 18B may be selected to encrypt the data packet B, the master key 18C may be selected to encrypt the data packet C, and the master key 18D may be selected to encrypt the data packet D, for example. As previously described, each encryption operation 20 associated with the encryption of a particular data packet A-D includes the selection of an associated initialization vector which is used as a seed value to render a specific encryption key from a respective master key 18A-18D.

In the present exemplary embodiment, the selection of the particular master key 18A-18D that is used to encrypt a particular data packet A-D may be chosen as a function of previously sent data packets. In other words, one or more data segments from one or more subsequent data packets 16 may be implemented to derive an entrypoint of the index corresponding to a particular one of the master keys 18A-18D, as described further below. As used herein, the "entrypoint" refers to the unique position or address in the index corresponding to a particular one of the master keys 18A-18D in the constellation 34. Because a particular master key 18A-18D is implemented to encrypt a particular data packet A-D at the transmitting node 12, the receiving node 14 may be provided with the entrypoint information such that the particular master key 18A-18D used to encrypt the data packet A-D may be selected to decrypt the encrypted data packets 22. As described above with reference to Figs. 2 and 3, the selection of initialization vectors a-c may be based on data segments from one or more previously transmitted data packets. Similarly, the selection of a particular master key 18A-18D may be dependent on data from previously sent data packets. Thus, in the exemplary embodiment illustrated in Fig. 4, instead of, or in addition to, using the data segments to form an initialization vector a-c, the data segments may be used to form an entrypoint corresponding to a particular one of the master keys 18A-18D in the constellation 34.

As with the obfuscation of the initialization vectors a-c, the characterization of the index entrypoint manipulation may be controlled by state transition mechanisms (e.g., convolution codes) and may be made arbitrarily complex, as previously described. In the present exemplary embodiment, there are four master keys 18A-18D, for purposes of illustration. Each of the master keys 18A-18D has a corresponding entrypoint of "00," "01," "10," and "11," respectively. In one embodiment, the first bit of four unencrypted data packets 16 may be sampled and summed. Based on the sum of the sample, a binary number corresponding to one of the entrypoints of the constellation 34 (and thus, a particular one of the master keys 18A-18D) may be obtained. The master key 18A-18D corresponding to the entrypoint obtained from the summation of the first bit of the four subsequent unencrypted data packets 16 may then be used to encrypt the next data packet 16 to be transmitted. Once the receiving node 14 receives the data packets containing the bits used to generate the entrypoint, and thus, select the master key 18A-18D to encrypt a subsequent data packet, the receiving node 14 may use the information from the prior data packets to determine the particular master key 18A-18D used to encrypt the subsequent data packet, and the subsequent data packet may be successfully decrypted by using the same master key 18A-18D.

As can be appreciated, a more complex approach may be used such that data bits from preceding data packets are implemented to drive a convolution code or one or more state machines to generate the entrypoint as a function of the code output or state. For instance, the convolution code may combine selected bits through a logic gate, such as a NAND gate, to derive an entrypoint, for example. By implementing state machines and/or convolution code, the entrypoint selection may be more complex and therefore difficult to derive by an unintended recipient. Regardless, the configuration of bit-fields used to encrypt the data packets 16 and the characteristics of the data manipulation (e.g., generator for convolution code), may be exchanged dynamically at the start of a session using small standards-based redefinition of WLAN frames, as can be appreciated by those skilled in the art.

As with the obfuscation techniques, a ramping up period may be implemented in the stochastic re-keying techniques to synchronize the participating nodes. Here, the ramping-up period refers to the period of time and/or the number of transmitted packets before the receiving node is ready to receive data packets in accordance with the present stochastic re-keying techniques. As previously described, there are a number of approaches that may be implemented for ramping-up the receiving node's memory of successfully decrypted packets. In accordance with one approach of ramping-up, a number of packets are encrypted using an initial master key, as in conventional WEP networks. The packets are transmitted to a receiving node and decrypted using the same initial master key. Once the receiving node has a sufficient cache of decrypted data, the receiving node is able to use the decrypted data received in the data packets to successfully determine which master keys were used to encrypt subsequent data packets which were encrypted using the presently described stochastic re-keying techniques. As can be appreciated, the ramping up period for the stochastic re-keying may be implemented in accordance with techniques described with reference to Fig. 3.

While the initialization vector obfuscation techniques described with reference to Figs. 2 and 3 and the stochastic re-keying techniques, described with reference to Fig. 4, may be implemented separately, the techniques may be implemented in conjunction with one another to provide even further security for wireless transmissions. In one exemplary embodiment, the same data segments may be implemented using the same or different combining techniques to generate an initialization vector and an entrypoint to encrypt a subsequent data packet. Alternatively, different data segments from the same or different data packets may be used to generate the initialization vector and entrypoint. As can be appreciated, the exemplary embodiment of Fig. 4 illustrates encrypted data packets 22 having obfuscated initialization vectors (i.e., headers 24 which do not include the corresponding initialization vector), as in Fig. 2. As can be appreciated, each of the presently described techniques is compatible with IEEE 802.11 and 802.11x WEP standards and may be implemented as optional, passive, "high security modes" at network nodes supporting such techniques.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

## Claims

1. A method comprising:
generating a first entrypoint corresponding to a first master key [34] at a first node [12] in a wireless network [32], wherein generating the first entrypoint comprises generating the first entrypoint as a function of at least one first data packet [16]; and
encrypting [20] a subsequent data packet [16] using the first master key [34].

2. The method, as set forth in claim 1, wherein generating the first entrypoint comprises using respective data segment from each of the at least one first data packet [16].

3. The method, as set forth in claim 2, wherein generating the entrypoint comprises convoluting each of the respective data segments from the at least one first data packet [16].

4. The method, as set forth in claim 1, comprising:
transmitting the at least one first data packet [22] to a second node [14] in the wireless network [32]; and
transmitting the subsequent data packet [22] to the second node [14] in the wireless network [32] after transmitting the at least one first data packet [22].

5. The method, as set forth in claim 4, comprising:
decrypting [26] the at least one first data packet [22] at the second node [14]; reconstructing the first entrypoint at the second node [14] from the respective data segment from each of the at least one first data packet [28]; and
decrypting [26] the subsequent data packet [22] using the first master key [34] corresponding to the first entrypoint.
